# EUROPEAN PATENT APPLICATION

(11) **EP 2 703 879 A1**
(43) Date of publication of application: **05.03.2014**
(21) Application number: 13182462.5
(22) Date of filing: 30.08.2013
(51) Int. Cl.: G02F 1/13, B32B 38/18

(54) **Liquid crystal module assembling device**

(30) Priority: 04.09.2012 CN 201210324568
(71) Applicant: Boe Technology Group Co. Ltd., Beijing 100015 (CN); Beijing BOE Display Technology Co., Ltd., Beijing 100176 (CN)
(72) Inventor: Zhang, Wei, 100176 Beijing (CN); Chu, Xiaoliang, 100176 Beijing (CN)
(74) Representative: Brötz, Helmut

(57) **Abstract**

The embodiments of the present invention disclose a module assembling device comprising a carrying platform (41) for bearing a backlight module, a picking unit (100) comprising a suction mechanism (3) for picking and releasing a liquid crystal module (12), a carrying platform movement mechanism (300) for moving the carrying platform (41) and a picking unit movement mechanism (200) for moving the picking unit (100), wherein the module assembling device also includes a turning mechanism (7) for turning the liquid crystal module (12), thereby allowing an operator peel off a protective film formed on a polariser sheet of the liquid crystal module (12).

## Description

### TECHNICAL FIELD

Embodiments of the present invention relate to a module assembling device.

### BACKGROUND

A liquid crystal display (LCD) is a passive lighting device, mainly including a liquid crystal module and a backlight module. Because the liquid crystal layer in the liquid crystal display does not have a lighting function itself, a backlight module is required for providing a light source for the liquid crystal display, and the display of the liquid crystal display is controlled by controlling the light transmission rate of the liquid crystal. The manufacturing process of the liquid crystal display comprises three main processes, i.e., an array process, a cell assemble process, and a module process.

The module process comprises a module assembling step, i.e., the step of aligning the liquid crystal module with the backlight module and assembling them together. Before the module assembling step, the liquid crystal module is positioned with the array side facing down and the Color Filter side facing up, and a protective film for protecting the polarizer sheet is provided on the array side. Therefore, during the module assembling step, the protective film for the polarizer sheet at the array side surface of the liquid crystal module needs to be peeled off first, so as to assemble the liquid crystal module and the backlight module together. At present, the modules are typically assembled manually, and the backlight module and the liquid crystal module are aligned in a manner that the backlight module remains static while the liquid crystal module moves. However, such manual module assembly has the following disadvantages, especially for a large size product, such as a product having a dimension larger than 100 inches. 1. The liquid crystal module has a large lateral dimension and a relative small thickness, and thus the liquid crystal module may be readily damaged during a manual transportation of the liquid crystal module. 2. The liquid crystal module has a relative large weight, and thus a large number of operators and labors may be required, and thus may result in low work efficiency due to long operation time of alignment by the operators. 3. During the process of peeling off the protective film for the polarizer sheet of the liquid crystal module, the manually lifting and lowing or turning of the liquid crystal module may be difficult and may need long operation time, and the liquid crystal module may be readily damaged, resulting in an extended operation time of the whole module assembling process, low work efficiency and a largely increased cost.

### SUMMARY

The embodiments of the present invention provide a module assembling device. The usage of the module assembling device for assembling the liquid crystal display can avoid the damage to the liquid crystal module resulted from the manual transportation of the liquid crystal module, resulting in an increased yield and efficiency, and a decreased number of operators and reduced labor cost.

The embodiments of the present invention provide a module assembling device comprising a carrying platform for bearing the backlight module; a picking unit for picking up and releasing the liquid crystal module; and either one or two selected from the group comprising a carrying platform movement mechanism for moving the carrying platform and a picking unit movement mechanism for moving the picking unit.

The liquid crystal module assembling device of an embodiment of the present invention comprises a carrying platform movement mechanism and/or a picking unit movement mechanism. Both of the carrying platform movement mechanism and the picking unit movement mechanism can align the backlight module with the liquid crystal module mechanically, and thus the movement of the backlight module and/or the liquid crystal module can be performed mechanically. Therefore, the damage to the liquid crystal module resulted from the manual transportation of the liquid crystal module is avoided, resulting in an increased yield and efficiency, and a decreased number of operators and reduced labor cost.

For example, in an embodiment of the present invention, the picking unit may comprise a suction mechanism. The suction mechanism may be one or more suction cup, or a vacuum suction pad having a vacuuming channel.

In prior art, when the liquid crystal module is moved manually, the operators grasp the edges of the liquid crystal module by hand, and may touch the array side and the color filter side of the liquid crystal module. This will not only increase the risk of damage to the array side, but also may lead to cracking of the liquid crystal module due to small contact area of the hand. While the liquid crystal module is griped by the suction mechanism, only the color filter side of the liquid crystal module will be contacted and the suction force of the suction mechanism is distributed evenly on the color filter side of the liquid crystal module, and thus the aforesaid problems can be avoided.

For example, in another embodiment of the present invention, the suction mechanism comprises a first suction mechanism for griping a liquid crystal panel of the liquid crystal module and a second suction mechanism for griping a flexible circuit board of the liquid crystal module. The first suction mechanism comprises first suction cups and the second suction mechanism comprises second suction cups. Various sizes and numbers of suction cups can be adopted according to the size of the liquid crystal module. In the prior art, when the liquid crystal module and the backlight module are being aligned and assembled, the liquid crystal panel of the liquid crystal module and the strip shape flexible circuit board of the liquid crystal module are grasped by hands separately, and thus may result in tearing off or break of the two parts. The liquid crystal panel and the flexible circuit board are griped by the first suction cups of the first suction mechanism and the second suction cups of the second suction mechanism respectively, and thus the liquid crystal module as a whole can be hold firmly, and there is no tearing off between the liquid crystal panel and the flexible circuit board.

For example, in another embodiment of the present invention, the picking unit movement mechanism may comprise a turning mechanism for turning the picking unit with a maximum turning angle up to 90 degrees. The turning mechanism may be driven by a motor or manually. The protective film for the polarizer sheet at the array side of the liquid crystal module can be peeled off after the turning of the liquid crystal module by the turning mechanism. Without the turning mechanism, the operators have to peel off the protective film for the polarizer sheet at the array side of the liquid crystal module while the array side of the liquid crystal module is directly facing the ground, and thus such operation is inconvenient. The liquid crystal module is angled from the horizontal surface after it is turned, and thus the operators may peel off the protective film for the polarizer sheet at the array side of the liquid crystal module more conveniently. The liquid crystal module is turned back to horizontal position so that the array side of the liquid crystal module faces downward after the protective film being peeled off from the polarizer sheet.

For example, in another embodiment of the present invention, the carrying platform movement mechanism may comprise an alignment mechanism for adjusting the position of the carrying platform.

For example, the alignment mechanism may comprise an X direction movement mechanism for moving the carrying platform in the X direction and a Y direction movement mechanism for moving the carrying platform in the Y direction; wherein both of the X direction and the Y direction are parallel to a horizontal surface and the X direction is perpendicular to the Y direction. The carrying platform functions to support the backlight module. The X direction movement mechanism and the Y direction movement mechanism can precisely move the carrying platform in the X direction and Y direction, so as to move the backlight module on the carrying platform. The X direction movement mechanism comprises a lead screw and a rail, the Y direction movement mechanism comprises a lead screw and a rail.

For example, the alignment mechanism comprises a Z direction elevator mechanism for moving the carrying platform in a Z direction perpendicular to a horizontal surface. The backlight module is lifted and lowered by the Z direction elevator, so that the movement of the liquid crystal module is reduced during the alignment of the liquid crystal module with the backlight module, especially during the alignment of a large size liquid crystal module and the backlight module. The reduction of the movement of the liquid crystal module can result in a substantially reduced risk of damage to the liquid crystal module.

For example, the backlight module is positioned on the carrying platform, such that the position of the backlight module can be adjusted in the X direction, Y direction and Z direction respectively, and thus the backlight module can be precisely aligned with the liquid crystal module.

For example, in another embodiment of the present invention, the Z direction elevator mechanism comprises a lead screw and a guide post.

For example, the X direction movement mechanism, the Y direction movement mechanism and the Z direction elevator mechanism can achieve the movement by using the lead screws capable to adjust the distances precisely, and thus precise alignment and movement in the X direction, Y direction and Z direction can be achieved. Of course, the alignment mechanism can be driven by a motor, a cylinder or a manual rocker etc.

For example, in another embodiment of the present invention, the carrying platform movement mechanism may comprise wheels mounted under the carrying platform; the picking unit movement mechanism comprises a slide rail, said picking unit being slidably connected to the slide rail. On one hand, the wheels under the carrying platform enable the movement of the carrying platform on a horizontal surface, and thus have the function of transportation. One the other hand, the wheels enable the rotation of the carrying platform about a Z axis. Of course, the wheels also enable the movement of the carrying platform in any horizontal direction so as to roughly adjust the position in the horizontal surface. The picking unit may slide on the rail away from the position above the location where the liquid crystal module is originally positioned. Of course, the rail may be driven by a motor, a lead screw or a cylinder etc.

For example, the picking unit movement mechanism may comprise an elevator mechanism, which is connected to the rail for lifting and lowering the rail and thus the picking unit. Of course, the drive of the elevator mechanism may be a motor, a lead screw and a cylinder etc.

### BRIEF DESCRIPTION OF THE DRAWINGS

In order to illustrate the technical solution of the embodiments of the invention more clearly, the drawings of the embodiments will be briefly described in the following. Apparently, the described drawings are only directed to some embodiments of the invention and thus are not a limitation to the present invention.

Fig. 1 is a schematic view showing the structure of the module assembling device according to the third embodiment of the present invention;

Fig. 2 is a schematic view showing the structure of the suction mechanism of the module assembling device according to the third embodiment of the present invention;

Fig. 3 is a schematic view showing the structure of the turning mechanism of the module assembling device according to the third embodiment of the present invention;

Fig. 4 is a schematic view showing the structures of the X direction movement mechanism and Y direction movement mechanism of the carrying platform movement mechanism of the module assembling device according to the third embodiment of the present invention;

Fig. 5 is a schematic view showing the structure of the Z direction elevator mechanism of the carrying platform movement mechanism of the module assembling device according to the third embodiment of the present invention.

### DETAILED DESCRIPTION

For better understanding of the technical solution of the present invention, the present invention will be further described in details in connection with the drawings and the specific embodiments.

Unless otherwise defined, all the technical and scientific terms used herein have the common meanings as understood by one of ordinary skill in the art to which the present invention belongs. The terms "first" "second" etc., which may be used in the description and the claims of the present invention, are not intended to indicate any sequence, number or importance, but merely to distinguish various components from one another. Also, the terms such as "a" "an" etc., are not intended to limit the number, but indicate the existence of at least one. The terms "comprise" "comprising" "include," "including" etc., are intended to specify that the elements or the objects stated before these terms encompass the elements or the objects and equivalents thereof listed after these terms, but do not exclude other elements or objects. The phrases "connect", "connected", etc., are not intended to be limited to a physical connection or mechanical connection, but may include an electrical connection, directly or indirectly. "Up" "under" "right" "left" and the like are only used to indicate relative position relationship, and when the position of the described object is changed, the relative position relationship may be changed accordingly.

The first embodiment

This embodiment provides a module assembling device, comprising: a carrying platform for bearing a backlight module; a picking unit for picking and releasing a liquid crystal module; and a carrying platform movement mechanism for moving the carrying platform.

When module assembling is performed with the module assembling device of this embodiment, first placing the backlight module on the carrying platform, and then picking the liquid crystal module using the picking unit, and after that, moving the carrying platform using the carrying platform movement mechanism so as to align the backlight module on the carrying platform with the liquid crystal module picked up by the picking unit. After the alignment, the picking mechanism releases the liquid crystal module, and thus the liquid crystal module and the backlight module is assembled.

In this embodiment, the movement of the backlight module is performed mechanically, and thus the inconvenience resulted from the manual transportation and alignment of the backlight module is avoided and the precision of the alignment is increased. Moreover, since the picking of the liquid crystal module is performed mechanically, the labor cost of the operators is reduced.

The second embodiment

This embodiment provides a module assembling device comprising: a carrying platform for bearing a backlight module; a picking unit for picking and releasing a liquid crystal module; and a picking unit movement mechanism for moving the picking unit.

When performing module assembling using the module assembling device of this embodiment, first placing the backlight module on the carrying platform, and then picking the liquid crystal module using the picking unit, and after that, moving the liquid crystal module so as to align the liquid crystal module with the backlight module by the picking unit movement mechanism. After the alignment, the picking mechanism releases the liquid crystal module, and thus the liquid crystal module and the backlight module is assembled.

In this embodiment, the movement of the liquid crystal module is performed mechanically, and thus the damage to the liquid crystal module resulted from the manual transportation and alignment of the liquid crystal module is avoided. Moreover, since the picking of the liquid crystal module is performed mechanically, the labor cost of the operators is reduced.

The third embodiment

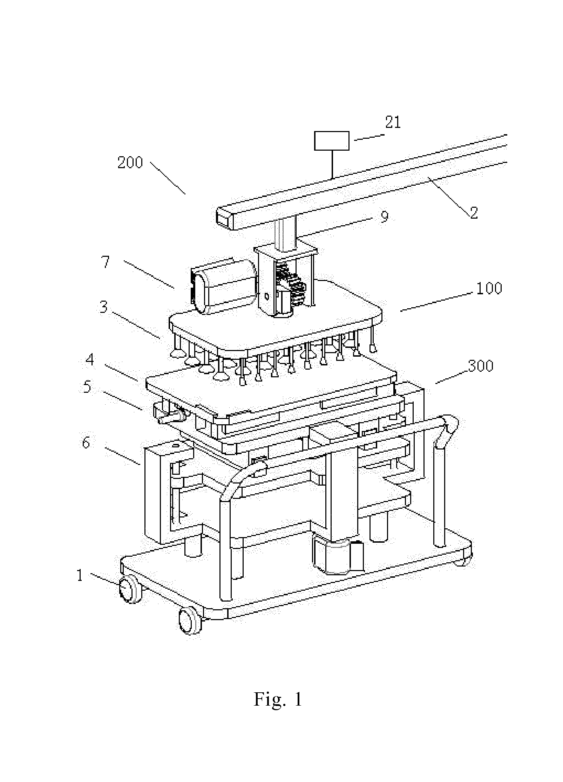

As shown in Figs. 1-5, the present embodiment provides a module assembling device, comprising: a carrying platform 41 for bearing a backlight module (not shown); a picking unit 100 for picking and releasing the liquid crystal module 12; a carrying platform movement mechanism 300 for moving the carrying platform 41; and a picking unit movement mechanism 200 for moving the picking unit 100.

Both of the carrying platform movement mechanism 300 and the picking unit movement mechanism 200 can achieve the alignment of the backlight module with the liquid crystal module 12 mechanically. Thus, the movement of the backlight module and the liquid crystal module 12 is performed mechanically, and therefore the damage to the liquid crystal module 12 due to manual transportation of the liquid crystal module 12 is avoided, resulting in an increased yield and efficiency, and a decreased number of operators and reduced labor cost.

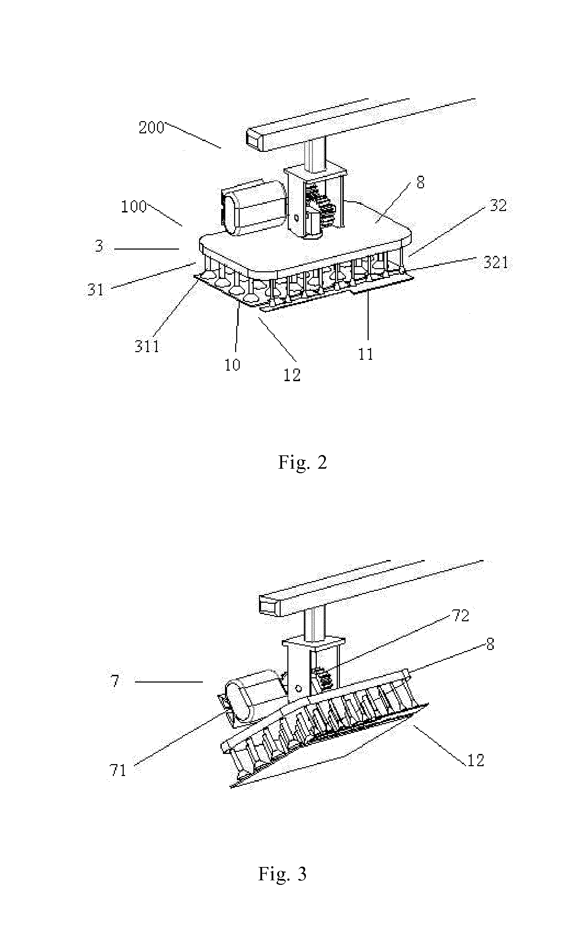

Preferably, for example, as shown in Fig. 2, the picking unit 100 comprises a suction mechanism 3 which may be one or more suction cup, or a vacuum suction pad having a vacuuming channel. More preferably, each of the suction cups is provided with a pipeline for vacuuming. When the suction mechanism 3 is suction cups, each of the suction cups may be attached to a substrate 8.

In the prior art, when the liquid crystal module 12 is moved manually, the operators grasp the edges of the liquid crystal module 12 by hand, and may touch the array side and the color filter side of the liquid crystal module 12. This will not only increase the risk of damage to the array side, but also may lead to cracking of the liquid crystal module 12 due to small contact area of the hands. When the suction mechanism 3 is used to grip the liquid crystal module 12, only the color filter side of the liquid crystal module 12 is contacted and the sucking force of the suction mechanism 3 is distributed evenly on the color filter side of the liquid crystal module 12, and thus the aforesaid problem can be avoided.

As shown in Fig. 2, the suction mechanism 3 includes a first suction mechanism 31 for griping the liquid crystal panel 10 of the liquid crystal module 12 and a second suction mechanism 32 for griping the flexible circuit board 11 of the liquid crystal module 12. Various sizes and numbers of suction cups can be used according to the size of the liquid crystal module 12. In this embodiment, the first suction mechanism 31 comprises a plurality of first suction cups 311 arranged in a rectangular shape for griping a rectangular liquid crystal panel 10, while the second suction mechanism 32 comprises a plurality of second suction cups 321 arranged along one side of the rectangular shape of the first suction cups 311 for griping the flexible circuit board 11 of the liquid crystal module 12. The size of the area of the substrate 8 on which the second suction cups 321 are arranged corresponds to the size of the flexible circuit board 11, and the shape of the area on which the first suction cups 311 and the second suction cups 321 are positioned corresponds to the shape of the liquid crystal module 12.

In the prior art, when the liquid crystal module 12 and the backlight module are being aligned and assembled, the liquid crystal panel 10 of the liquid crystal module 12 and the flexible circuit board 11 of the linearly strip-shape liquid crystal module 12 are grasped separately by the operators, and thus may result in a tearing off or break of the two parts. In this embodiment, the liquid crystal panel 10 and the flexible circuit board 11 are griped by the first suction cups 311 of the first suction mechanism 31 and the second suction cups 321 of the second suction mechanism 32, respectively, and thus the liquid crystal module 12 as a whole can be hold firmly, and there is no tearing off between the liquid crystal panel 10 and the flexible circuit board 11.

As shown in Fig. 3, a turning mechanism 7 for turning the substrate 8 is provided above the substrate 8 which is provided with suction cups. The turning mechanism 7 may comprise a turning motor 71 and gears 72 which turn the substrate 8 and thus the liquid crystal module 12 through the driving of a turning motor 71. Thus the substrate 8 is angled from a horizontal surface with a maximal turning angle up to 90 degrees. Of course, the turning mechanism 7 can also achieve the turning function by means of other driving or transmission device. The protective film for the polarizer sheet at the array side of the liquid crystal module 12 can be peeled off after the turning of the liquid crystal module 12 by the turning mechanism 7. Without the turning mechanism 7, the operators have to peel off the protective film for the polarizer sheet at the array side of the liquid crystal module 12 while the array side of the liquid crystal module 12 is directly facing the ground, and thus such operation is inconvenient. The liquid crystal module 12 is angled from the horizontal surface after it is turned, and thus the operator may peel off the protective film for the polarizer sheet at the array side of the liquid crystal module 12 more conveniently. Then, the liquid crystal module 12 is turned to horizontal position so that the array side of the liquid crystal module 12 faces downward after the protective film for the polarizer sheet being peeled off.

Preferably, for example, as shown in Fig. 1, the picking unit movement mechanism 200 comprises a slide rail 2, and a connecting rod 9 perpendicular to the substrate 8 is fixed above the substrate 8. The connecting rod 9 is slidably connected to the slide rail 2. Thus the substrate 8 can slide along the slide rail 2 and therefore move the liquid crystal module 12. The slide rail is driven by a motor (not shown). Of course a lead screw or a cylinder can be used to drive the slide rail. As such, mechanically translation and platform movement can be achieved.

Preferably, for example, the picking unit movement mechanism 200 may also comprise an elevator mechanism 21 connected to the slide rail 2. Said elevator mechanism 21 functions to lift and lower the substrate 8 connected to the slide rail 2, that is, lift and lower the liquid crystal module 12. The drive of the elevator mechanism 21 is a motor. Of course, the drive of the elevator mechanism 21 may also be a cylinder etc. Said elevator mechanism 21 can lift and lower the liquid crystal module 12 in a vertical direction, and can also align the liquid crystal module 12 with the backlight module in the vertical direction.

Preferably, for example, the carrying platform movement mechanism 300 comprises an alignment mechanism for adjusting the position of the carrying platform 41.

Preferably, for example, as shown in Fig. 1, the alignment mechanism comprises an X direction movement mechanism 4 for moving the carrying platform 41 in the X direction and a Y direction movement mechanism 5 for moving the carrying platform in the Y direction, wherein the both of the X direction and the Y direction are parallel to the horizontal surface and the X direction is perpendicular to the Y direction.

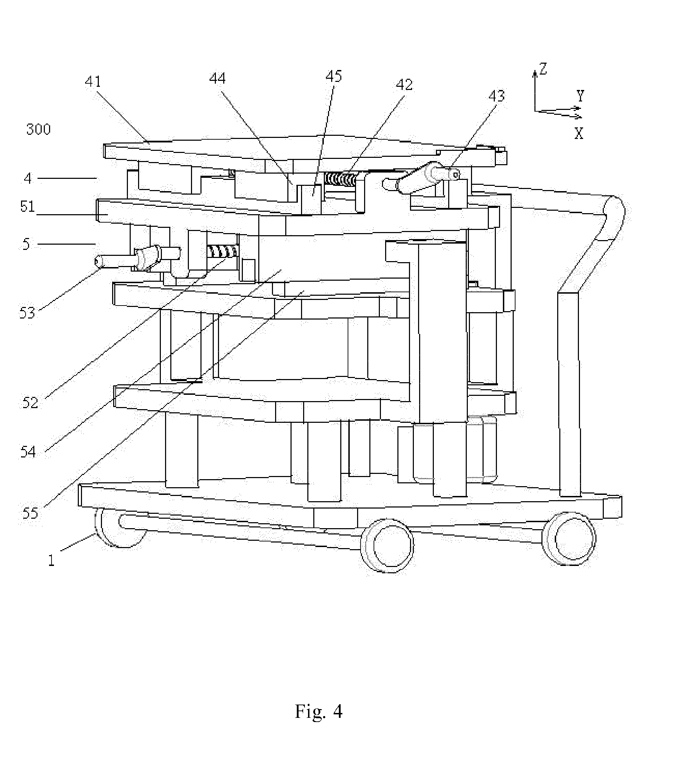

As shown in Figs. 1 and 4, the carrying platform 41 is provided at the upmost of the alignment mechanism for positioning the backlight module. The X direction movement mechanism 4 comprises a carrying platform 41, a first manual rocker 43, a first outer rail 44, a first inner rail 45, and a first lead screw 42. The first outer rail 44 is positioned below and connected to the carrying platform 41, the first inner rail 45 is above and connected to the Y direction movement platform 51, the first outer rail 44 is at the outside of and slidably connected to the first inner rail 45, and each of the first inner rail 45 and the first lead screw 42 is arranged in the X direction respectively. As shown in Fig. 4, the first lead screw 42 is above and connected to the Y direction movement platform 51, the first manual rocker 43 is connected to the first lead screw 42, and thus the rotation of the first manual rocker 43 rotates the first lead screw 42, and in turn slides the backlight module positioned on the carrying platform 41 in the X direction.

As shown in Figs 1 and 4, the Y direction movement mechanism 5 comprises a Y direction movement platform 51, a second lead screw 52, a second manual rocker 53, a second outer rail 54, and a second inner rail 55. The second outer rail 54 is positioned below and connected to the Y direction movement platform 51, the second inner rail 55 is above and connected to the Z direction movement platform 61, the second outer rail 54 is at the outside of and slidably connected to the second inner rail 55, and each of the second inner rail 55 and the second lead screw 52 is positioned longitudinally in the Y direction. As shown in Fig. 4, the second lead screw 52 is positioned above and connected to the Z direction movement platform 61, the second manual rocker 53 is connected to the second lead screw 52, and thus the rotation of the second manual rocker 53 rotates the second lead screw 52, and in turn slides the Y direction movement platform 51 in the Y direction.

As shown in Figs. 1 and 4, the precise positioning of the backlight module in the X direction and Y direction can be accomplished by the carrying platform 41 and the Y direction movement platform 51 driven by the rotation of the lead screw that is in turn driven by the rotation of the manual rocker. Of course, the drive of the carrying platform 41 and the Y direction movement platform 51 may be a motor, or a cylinder etc.

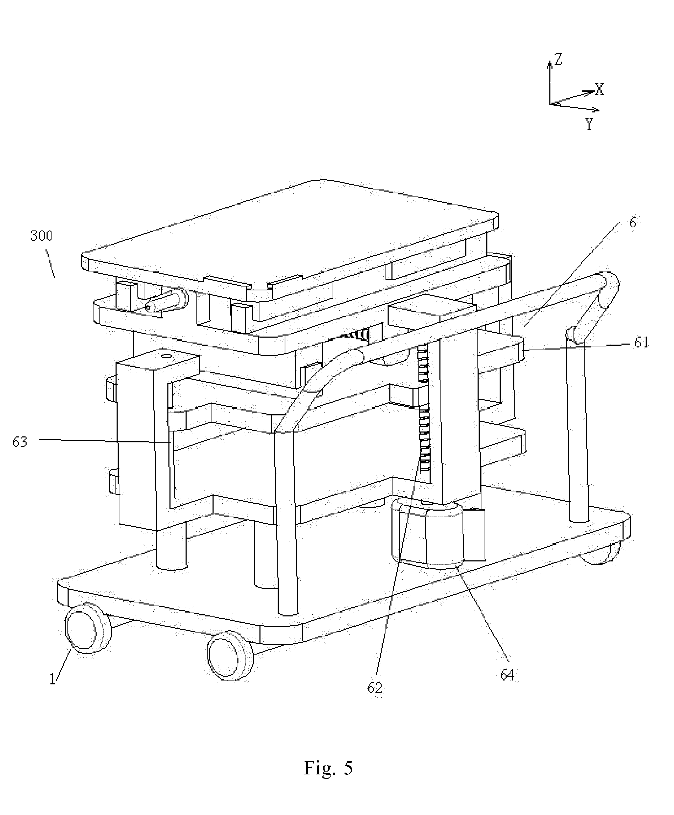

As shown in Fig. 5, the Z direction elevator mechanism 6 comprises a Z direction movement platform 61, a third lead screw 62, a guide post 63 and a Z direction movement motor 64.

The Z direction movement platform 61 is connected to and perpendicular to the third lead screw 62. The rotation of the third lead screw 62 driven by the Z direction movement motor 64 lifts and lowers the Z direction movement platform 61. Meanwhile, the Z direction movement platform 61 is connected to and perpendicular to the guide post 63. When the Z direction movement platform 61 is lifted and lowered by the lead screw, the guide post 63 enables the movement of the Z direction movement platform 61 in the Z direction, so as to prevent the offset of the Z direction movement platform 61 from the horizontal direction. The Z direction movement platform 61 is under a large vertical force, including the gravity of the backlight module, the gravity of the X direction movement mechanism 4, the gravity of the Y direction movement mechanism 5 and the gravity of the Z direction movement platform 61 etc. Thus, the guide post 63 has not only a guiding function but also a retaining function. Meanwhile, preferably, the drive of the Z direction movement platform 61 is a Z direction movement motor 64 to increase its driving force. Of course, the Z direction movement platform 61 may also be driven by a cylinder or in a manual manner.

The backlight module is positioned on the carrying platform 41, and the position of the backlight module on the carrying platform 41 is adjusted in the X direction, Y direction and Z direction to align with the liquid crystal module 12 by means of the alignment mechanism, such that the movement of the liquid crystal module 12 is reduced during the alignment of the liquid crystal module 12 with the backlight module, especially during the alignment of a large size liquid crystal module 12 and the backlight module, and thus the risk of damage to the liquid crystal module 12 is substantially reduced.

As shown in Fig. 1, preferably, the carrying platform movement mechanism 300 includes wheels 1 mounted under the carrying platform 41. On one hand, the wheels 1 under the carrying platform 41 enable the movement of the carrying platform 41 on a horizontal surface, and thus have the function of transportation. One the other hand, the wheels 1 enable the rotation of the carrying platform 41 about a Z axis. Of course, the wheels 1 may also enable the movement of the carrying platform 41 in any horizontal direction so as to roughly adjust the position in the horizontal surface.

In this embodiment, the X direction movement mechanism 4, the Y direction movement mechanism 5 can realize a precise alignment of the backlight module in the X direction and Y direction, while the wheels 1 can realize a general alignment in said two directions, and may also realize the rotation of the backlight module about the Z direction. Thus, they may work together to achieve the alignment of the backlight module.

The process of module assembly by using the module assembling device of this embodiment comprises the following steps. First, the liquid crystal module 12 is picked using the suction mechanism 3, wherein the first suction mechanism 31 grips the liquid crystal panel 10 using the first suction cup 311, while the second suction cups 321 of the second suction mechanism 32 grips the flexible circuit board 11 with the protective film for the polarizer sheet at the array side of the liquid crystal module 12 facing down. The liquid crystal module 12 is moved away from its original position by using the slide rail 2, and the protective film for the polarizer sheet at the array side of the liquid crystal module 12 is peeled off from the liquid crystal module 12. Since the liquid crystal module 12 is not positioned above the position where the liquid crystal module 12 was originally positioned, the falling of any foreign matter onto the color filter side of other liquid crystal module can be prevented when the protective film for the polarizer sheet is peeling off at the array side of the liquid crystal module 12. Alternatively, the liquid crystal module 12 can be turned by using the turning mechanism 7 before peeling off the protective film for the polarizer sheet at the array side of the liquid crystal module 12. Without the turning mechanism 7, the operator has to peel off the protective film for the polarizer sheet at the array side of the liquid crystal module 12 while the array side of the liquid crystal module 12 is facing the ground. The liquid crystal module 12 is angled from the horizontal surface after it is turned, such that it is more convenient for the operator to peel off the protective film for the polarizer sheet at the array side of the liquid crystal module 12. After the protective film for the polarizer sheet is peeled off, the liquid crystal module 12 is turned to its horizontal position such that the array side of the liquid crystal module 12 is facing downwardly. The carrying platform movement mechanism 300 carrying the backlight module is moved to a position approximately below the suction mechanism. At this time, the liquid crystal module 12 griped by the suction cup under the substrate 8 is aligned with the backlight module by lifting, lowering and translating of the liquid crystal module 12 through using the slide rail 2 above the substrate 8 and the elevator mechanism 21 connected to the slide rail 2. Meanwhile, the position of the backlight module is precisely aligned by using the alignment mechanism of the support platform, e.g., adjusting the position of the backlight module in the X direction, Y direction and Z direction by using the X direction movement mechanism 4, the Y direction movement mechanism 5, the Z direction movement mechanism 6. When appropriate, rotation about the Z direction may be performed by the wheels 1 of the carrying platform movement mechanism 300. After the alignment, the suction mechanism 3 releases the liquid crystal module 12, and thus places the liquid crystal panel 10 just into the frame surrounding the backlight module, and then the liquid crystal module 12 and the backlight module is assembled.

It can be understood that the aforesaid embodiments are merely exemplary embodiments for illustrating the principle of the present invention, and the present invention is not limited to the exemplary embodiments. It is obvious to those skilled in the art that the present invention may have various variations or modifications without departing from the spirit and essence of the present invention, and all such variations or modifications are intended to be within the scope of the following claims.

## Claims

1. A module assembling device comprising a carrying platform for bearing a backlight module, **characterized in that** the module assembling device further comprises:
a picking unit for picking and releasing a liquid crystal module; and
a carrying platform movement mechanism for moving the carrying platform and/or a picking unit movement mechanism for moving the picking unit.

2. The module assembling device according to claim 1, **characterized in that** the picking unit comprises a suction mechanism.

3. The module assembling device according to claim 2, **characterized in that** the suction mechanism comprises a first suction mechanism for griping a liquid crystal panel of the liquid crystal module and a second suction mechanism for griping a flexible circuit board of the liquid crystal module.

4. The module assembling device according to claim 2 or 3, **characterized in that** the suction mechanism comprises one or more suction cup, a vacuum suction pad having a vacuuming channel, or a suction cup having a pipeline for vacuuming.

5. The module assembling device according to anyone of claims 1 to 4, **characterized in that** the picking unit movement mechanism comprises a turning mechanism for turning the picking unit.

6. The module assembling device according to anyone of claims 1 to 5, **characterized in that** the carrying platform movement mechanism comprises an alignment mechanism for adjusting the position of the carrying platform.

7. The module assembling device according to claim 6, **characterized in that** the alignment mechanism comprises an X direction movement mechanism for moving the carrying platform in an X direction and a Y direction movement mechanism for moving the carrying platform in a Y direction;
wherein both of the X direction and the Y direction are parallel to a horizontal surface and the X direction is perpendicular to the Y direction.

8. The module assembling device according to claim 7, **characterized in that** the X direction movement mechanism comprises a first lead screw and a first rail, the Y direction movement mechanism comprises a second lead screw and a second rail.

9. The module assembling device according to anyone of claims 6 to 8, **characterized in that** the alignment mechanism comprises a Z direction elevator mechanism for moving the carrying platform in a Z direction perpendicular to a horizontal surface.

10. The module assembling device according to claim 9, **characterized in that** the Z direction elevator mechanism comprises a third lead screw and a guide post.

11. The module assembling device according to anyone of claims 6 to 10, **characterized in that** the alignment mechanism is driven by a motor, a cylinder or a manual rocker.

12. The module assembling device according to anyone of claims 1 to 11, **characterized in that** the carrying platform movement mechanism comprises wheels mounted at its bottom.

13. The module assembling device according to anyone of claims 1 to 12, **characterized in that** the picking unit movement mechanism comprises a slide rail, said picking unit being slidably connected to the slide rail.

14. The module assembling device according to claim 13, **characterized in that** the picking unit movement mechanism further comprises an elevator mechanism connected to the slide rail for lifting and lowering the picking unit.
